# EUROPEAN PATENT APPLICATION

(11) **EP 1 933 236 A1**
(43) Date of publication of application: **18.06.2008**
(21) Application number: 06126197.0
(22) Date of filing: 12.12.2006
(51) Int. Cl.: G06F 11/14

(54) **Branch Office and remote server smart archiving based on mirroring and replication software**

(71) Applicant: Ixiar Technologies, 3751LP Buntschoten (NL)
(72) Inventor: van Dijk, Jaco, 3828LN, Hoogland (NL)

(57) **Abstract**

A system and method for archiving dispersed data (either locally or remote), based on a user-defined set of criteria (policy based) based on a foundation of data transfer, consisting of mirroring and/or replication software, between a source machine and a target machine. Given that the 2 data sets are in a consistent state (verified by the solution) the data will be analyzed based on the criteria as defined in the policy, When the criteria are met the system will verify the existence and integrity of the data on both locations (source and target servers). On the Target Server the data will be copied to archive medium and on the source location the data will be replaced by a shortcut link directing the file system to the archive location in the case the data is needed. The shortcut will be mirrored or replicated by the software in use after which the original file (replaced by the shortcut or stub) will be deleted, thus freeing up valuable storage space on the Source and Target Server, while maintaining total transparency and accessibility for the Servers while maintaining the integrity and security settings to the file as in the original environment allowing for a compliant Archiving solution.

## Description

### Field of Invention

The present invention relates generally to archiving data. More specifically, a system and method for processing and archiving data from a source machine and the target machine is disclosed.

### BACKGROUND OF THE INVENTION

Real-time data replication typically includes two main operations. The first operation is to do a synchronization wherein a machine with data to be replicated, herein referred to as a source, has its data copied in bulk and transferred over to a second computer, herein referred to as a target. The second function can be a real-time replication or mirroring of the changes to the data from the source to the target. This is a way of centralizing data. Based on this Real-Time Replication and Mirroring software the Invention can copy data to the archive if the data meets the criteria as defined in the policy thus enabling freeing up data space on the Source and remote site by replacing the original content by Shortcut. Current Archive Solutions are based on single server archiving within a data centre, Not including remotely located data and/or replicated data sets.

### BRIEF DESCRIPTION OF THE DRAWINGS

In order that the manner in which the above-recited and other advantages and objects of the invention are obtained, a more particular description of the invention briefly described above will be rendered by reference to specific embodiments thereof which are illustrated in the appended drawings. Understanding that these drawings depict only typical embodiments of the invention and are not therefore to be considered limiting of its scope, the invention will be described and explained with additional specificity and detail through the use of the accompanying drawings in which:
Figure 1, is a block diagram of a data replication and archiving system according to an embodiment of the present invention.
Figure 2 - Target Process, is a flow diagram illustrating a method according an embodiment of the present invention for archiving data on the target to the archive pool, based on replication or mirror software in use.
Figure 3 - Source Process, is a flow diagram illustrating a method according an embodiment of the present invention for archiving data on the source to the archive pool, based on replication or mirror software in use.

### DETAILLED DESCRIPTION

It should be appreciated that this invention can be implemented in multiple ways, including local archiving of file systems, archiving of remotely located data sets, optimization of both local as well as remotely located storage systems based on user defined criteria for optimization (i.e. age of the original data).

The following invention is described by using diagrams to illustrate either the structure or the processing of certain embodiments to implement the system and method of the present invention. Using the diagrams in this manner to present the invention should not be construed as limiting of its scope. The present invention contemplates both a system and method for archiving a Source system (Remote system, Branch Office, etc) and a Target system to an Archive Pool.
The presently preferred embodiment of the system for mirroring and archiving a source and target system to an archive system comprises one or more general purpose computers. The system and method of the present invention, however, can also be used with any special purpose computers or other hardware systems and all should be included within its scope.

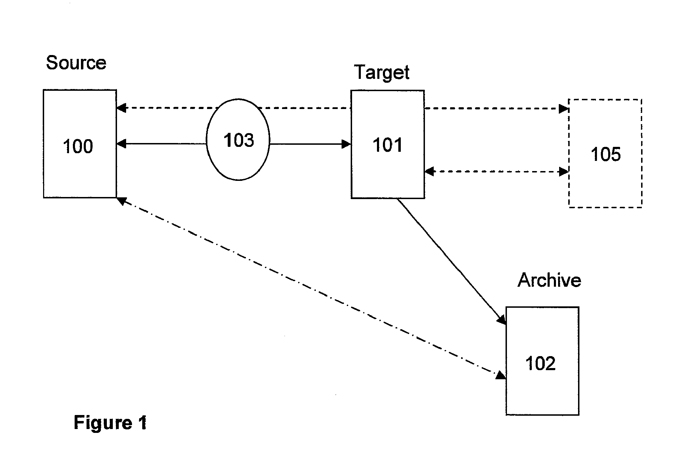

Figure 1 is a block diagram of a data replication system according to an embodiment of the present invention. In this example, a source machine 100 is coupled with a target machine 101. The source machine 100 and the target 101 are showed to be coupled through a network 103, such as a LAN or WAN.

According to an embodiment of the present invention, the efficiency of the data transfer between the source 100 and the target 101 is increased by recognizing that producing the data and the data changes in the exact order in which it occurs at the source 100 is necessary during the real-time replication operation. Once the data meets the user-defined criteria (hereafter known as policy), archiving starts on the target 101 .This data will be copied to the archive pool 102. The policy is stored in a central repository 105. In this central repository 105 we define the archive policy per replication specification, as specified in the replication or mirror software in use between source 100 and target 101. Policy definitions are based on Last Access time, Creation time, excluded files, archive pool, source location and target location.

After completion of this process on the target 101, a process on the source 100 is initiated to compare and verify if the data meets the policy and if the data is present in the archive pool 102, this policy is derived from the repository 105.

When the source data 100 meets the policy criteria and verification of the data in both locations, the original content will be assigned with a shortcut, containing a pointer to the archive pool 102. After the shortcut assignment the original data will be removed form the source 100 file system. The replication or mirror software will update the target 101 with the new information from the source 100. The shortcut and the remove will be written on the target 101 file system.

In the case that the source 100 request data that has a shortcut, it will follow the pointer to the archive pool 102, then the archive pool 102 sends the data back to the source file system 100.

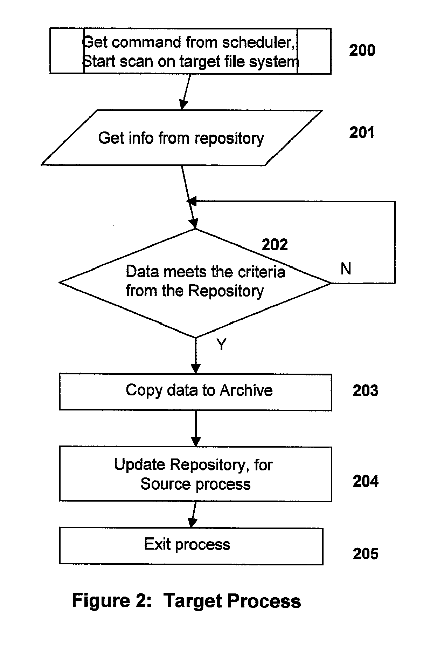

Figure 2 - Target Process, is a flow diagram illustrating a method according an embodiment of the present invention for archiving data on the target to the archive pool, based on replication or mirror software in use.

Target Process is a flow diagram of a method according an embodiment of the present invention for coping data from the target to the archive pool. In this example, it is assumed that the copy operation has begun, data are scant and if they met the user-defined criteria copied to the archive pool.

In this example, the target process (200) retrieves the information over the replication specification from the central repository (201). It is determined when data met the user-defined criteria (202) if met it will be copied (203) to the archive pool. When the whole replication specification is scant it will update the central repository (204), when this is done the process exit (205) and wait for the next scheduled time to start.

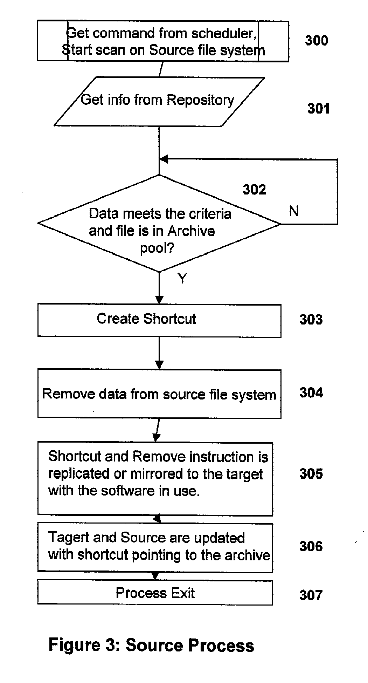

Figure 3 - Source Process, is a flow diagram illustrating a method according an embodiment of the present invention for archiving data on the source to the archive pool, based on replication or mirror software in use.

Source Process is a flow diagram of a method according an embodiment of the present invention for shortcut and remove data from the source server after verifying that the data is in the archive pool. In this example, it is assumed that the verify operation has begun, data are scant and if they met the user-defined criteria it will be shortcut and removed on the source file system.

In this example, the source process (300) retrieves the information over the replication specification from the central repository (301) It is determined when data met the user-defined criteria (302) if met it will create a shortcut (303),pointing to the archive pool, and then removed from the source file system (304). These changes will be mirrored and/or replicated to the target server (305), consisting of mirroring and/or replication software, between a source machine and a target machine. Both source and target has the information where the data is located, through the shortcut.

When the whole replication specification is scant it will update the central repository (306), when this is done the process exit (307) and wait for the next scheduled time to start,

Although the foregoing invention has been described in some detail for purposes of clarity of understanding, it will be apparent that certain changes and modifications may be practiced within the scope of the appended claims. It should be noted that there are many alternative ways of implementing both the process and apparatus of the present invention. Accordingly, the present embodiments are to be considered as illustrative and not restrictive, and the invention is not to be limited to the details given herein, but may be modified within the scope and equivalents of the appended claims.

## Claims

1. A system and method for archiving dispersed data (either locally or remote), based on a user-defined set of criteria (policy based) based on a foundation of data transfer, consisting of mirroring and/or replication software, between a source machine and a target machine. Given that the 2 data sets are in a consistent state (verified by the solution) the data will be analyzed based on the criteria as defined in the policy, When the criteria are met the system will verify the existence and integrity of the data on both locations (source and target servers). On the Target Server the data will be copied to archive medium and on the source location the data will be replaced by a shortcut link directing the file system to the archive location in the case the data is needed. The shortcut will be mirrored or replicated by the software in use after which the original file (replaced by the shortcut) will be deleted, thus freeing up valuable storage space on the Source and Target Server, while maintaining total transparency and accessibility for the Servers while maintaining the integrity and security settings to the file as in the original environment allowing for a compliant Archiving solution.

2. The method of claim 1, wherein the first operation includes a scan of the file system on the target server.

3. The method of claim 1, wherein the second operation includes coping data from the target server to the archive pool.

4. The method of claim 1, wherein the third operation includes a verify on the source server that the data in the archive pool is the same as the source data.

5. The method of claim 1, wherein the fourth operation includes a shortcut and remove on the source server.

6. The method of claim 1, wherein the fifth operation includes the replication or mirroring of shortcut and remove to the target server, consisting of mirroring and/or replication software.

7. The system and method is not limited to any kind of operating system or any kind of hardware.
